Europäisches Patentamt

European Patent Office

Office européen des brevets

(11) Veröffentlichungsnummer: **0 350 806**
**A2**

## EUROPÄISCHE PATENTANMELDUNG

(21) Anmeldenummer: 89112432.3

(22) Anmeldetag: 07.07.89

(51) Int. Cl.⁴: **E21B 7/28 , E21B 7/26 ,**
**E21B 7/20 , E21B 4/14 ,**
**//F16L1/00,E03F3/06**

(30) Priorität: 14.07.88 DE 3823900

(43) Veröffentlichungstag der Anmeldung:
**17.01.90 Patentblatt 90/03**

(84) Benannte Vertragsstaaten:
**AT BE CH DE ES FR GB GR IT LI LU NL SE**

(71) Anmelder: **Hans Brochier GmbH & Co**
**Martha Strasse 16**
**D-8500 Nürnberg(DE)**

(72) Erfinder: **Zimmermann, Heinz, Dipl.-Ing.**
**Im Harl 12**
**D-8157 Feldafing(DE)**

(74) Vertreter: **Czowalla . Matschkur Patentanwälte**
**Dr.-Kurt-Schumacher-Strasse 23 Postfach**
**9109**      -
**D-8500 Nürnberg 11(DE)**

(54) **Bodenverdrängungshammer.**

(57) Bodenverdrängungshammer zur Sanierung von im Boden verlegten Versorgungsleitungen, mit einem vorne angehängten Zugseil und einem über einen Druckluftschlauch mit einem äußeren Preßluftkompressor verbundenen Schlagwerk, um den mit einem konischen Kopf ggf. mit Schneiden, versehenen Bodenverdrängungshammer unter Aufbrechung und Verdrängung der Altleitung ins umgebende Erdreich durch die Altleitung vorzutreiben, wobei der Druckluftschlauch neben dem Zugseil verlaufend von vorne in den Kopf einmündet.

EP 0 350 806 A2

## Bodenverdrängungshammer

Die Erfindung bezieht sich auf einen Bodenverdrängungshammer zum Sanieren von im Boden verlegten Versorgungsleitungen, mit einem vorne angehängten Zugseil und einem über einen Druckluftschlauch mit einem äußeren Preßluftkompressor verbundenen Schlagwerk, um den mit einem konischen Kopf, ggf. mit Schneiden, versehenen Bodenverdrängungshammer unter Aufbrechung und Verdrängung der Altleitung ins umgebende Erdreich durch die Altleitung voranzutreiben.

Bei allen derartigen Bodenverdrängungshämmern - unabhängig davon, ob die neue Versorgungsleitung unmittelbar vom Bodenverdrängungshammer beim Aufbrechen der Altleitung mit eingezogen wird, indem sie am rückwärtigen Ende des Bodenverdrängungshammers angehängt wird, oder ob hierfür ein gesonderter Arbeitsgang vorgesehen wird - erfolgt die Versorgung des Druckluft- Schlagwerks durch eine rückwärts an den Bodenverdrängungshammer angehängte Druckluftleitung. Wegen des notwendigen Auffädelns der neuen Versorgungsleitung, d.h. der Schüsse, aus denen diese neue Versorgungsleitung zusammengesetzt wird, sowie in Verbindung mit der unabdingbaren Steifigkeit eines Druckluftschlauchs, ist diese Arbeitsweise sehr zeitaufwendig und es bedarf ganz erheblicher Rüstzeiten, ganz davon abgesehen, daß für eine Vielzahl von Sanierungsfällen dieses sog. "Berstlining"-Verfahren überhaupt keine Anwendung finden kann.

Der Erfindung liegt daher die Aufgabe zugrunde, einen Bodenverdrängungshammer der eingangs genannten Art so auszugestalten, daß er ein einfacheres rationelleres Arbeiten auch unter beengten Platzverhältnissen ermöglicht.

Zur Lösung dieser Aufgabe ist erfindungsgemäß vorgesehen, daß der Druckluftschlauch neben dem Zugseil verlaufend von vorne in den Kopf des Bodenverdrängungshammers einmündet, wobei die Ausgestaltung bevorzugt in der Weise erfolgen kann, daß das Außengehäuse unter Bildung eines Luftzuführungs-Ringspaltes zweischalig mit einer axialen Lufteintrittsöffnung an der Spitze des Außengehäuses und mit radialen Luftdurchtrittsöffnungen des Innengehäuses und des darin starr gehaltenen Steuerventils ausgebildet ist.

Durch das Abweichen von der bislang allgemein üblichen Form des Nachziehens des Druckluftschlauchs ergeben sich eine ganze Reihe von Vorteilen. Zum einen entfällt das jeweilige Auffädeln neuer Schüsse der nachzuziehenden neuen Versorgungsleitung über den Druckluftschlauch, der ja zu diesem Zweck immer wieder vom Druckluftkompressor abgekuppelt werden muß. Darüber hinaus ergibt die erfindungsgemäße Ausbildung die Möglichkeit, einen Bodenverdrängungshammer auch zur Sanierung einzusetzen, wenn nur sehr kleine Ausgangs-und Zielschächte zur Verfügung stehen, in denen ansonsten der Druckluftschlauch um mehr als 90° abgewinkelt werden müßte, was in der Praxis - noch dazu, wenn eine neue Versorgungsleitung darübergefädelt ist - kaum möglich ist. Auf der anderen Seite macht es keine nennenswerten Probleme, den Druckluftschlauch über den Zielschacht zusammen mit dem Zugseil zu verlegen, wobei dieses Zugseil in der Praxis ja grundsätzlich notwendig ist, so daß das einmalige Durchfädeln durch die zu sanierende Altleitung sowieso erforderlich ist und es keinerlei Unterschied macht, ob nur das Zugseil durch die Leitung gezogen wird oder gleichzeitig auch noch der Druckluftschlauch, ehe die Aufbrecharbeiten beginnen.

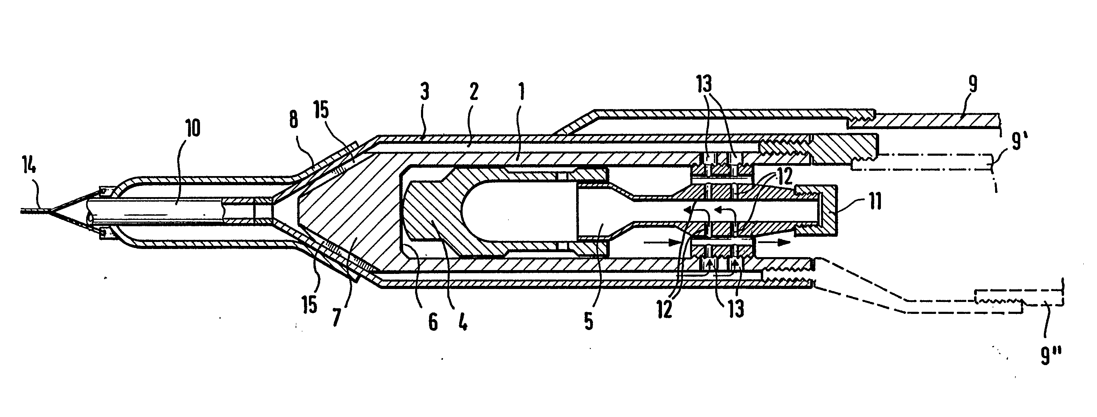

Weitere Vorteile, Merkmale und Einzelheiten der Erfindung ergeben sich aus der nachfolgenden Beschreibung eines Ausführungsbeispiels sowie anhand der Zeichnung, die einen schematischen Schnitt durch einen erfindungsgemäßen Bodenverdrängungshammer mit Druckluftversorgung von vorne zeigt.

Der in der Zeichnung dargestellte Bodenverdrängungshammer weist ein Innengehäuse 1 und ein ihn' unter Bildung eines Ringspaltes 2 umgebendes Außengehäuse 3 auf, in welchem in üblicher Weise ein Schlagkolben 4 längsverschiebbar gelagert ist, der mit Hilfe eines von einer äußeren Druckluftquelle mit Druckluft periodisch beaufschlagten Steuerventils 5 gegen die Stirnfläche 6 des Gehäuses 7 bewegbar ist. Das vordere Ende des Innengehäuses (dabei handelt es sich um eine übliche bekannte Erdrakete, die durch das darumgesetzte Außengehäuse 3 in erfindungsgemäßer Weise abgewandelt ist) stützt sich über Abstandsrippen 15 am entsprechenden konischen Abschnitt 8 des Außengehäuses ab, so daß die Schläge unmittelbar auch auf das Außengehäuse übertragen werden, so daß der gesamte Bodenverdrängungshammer durch diese Schläge fortlaufend durch eine nicht dargestellte aufzubrechende Altleitung gepreßt wird, wobei die aufgebrochenen Scherben der Altleitung gleichzeitig ins umgebende Erdreich verdrängt werden. Am hinteren Ende des Bodenverdrängungshammers sind - dargestellt wiederum in drei unterschiedlichen Ausführungsvarianten - die vorlaufenden Enden einer neu einzuziehenden Versorgungsleitung 9, 9′ oder 9″ angehängt, wobei ggf., wie bei der Rohrleitung 9″ angedeutet, auch ein Schockabsorber zwischengeschaltet sein kann. Im Gegensatz zu üblichen Bodenverdrängungshämmern, bei denen der Druckluftschlauch 10 rückwärts innerhalb der nachgezogenen neuen Versorgungsleitung 9, 9', 9" verläuft und somit auch axial von hinten in den Steuerschieber 5 einragt, ist erfindungsgemäß der Steuerschieber am rückwärtigen Ende durch eine Verschlußkappe 11 abgeschlossen. Dafür weist er seitliche radiale Bohrungen 12 auf, welche mit Bohrungen 13 des Innengehäuses fluchten, so daß die über den Ringspalt 2 herangeführte Druckluft der in die vordere Spitze des Außengehäuses 3 einmündenden Druckluftschlauchs radial von der Seite her in das Steuerventil 5 eindringt und dann in üblicher Weise die Schlagbewegungen des Schlagkolbens 4 bewirkt. Bei 14 ist schematisch das Zugseil angedeutet, neben dem der Druckluftschlauch 10 verlaufend aus der der Einsatzgrube jeweils abgelegenen Zielgrube an den Bodenverdrängungshammer herangeführt ist.

**Ansprüche**

1. Bodenverdrängungshammer zur Sanierung von im Boden verlegten Versorgungsleitungen, mit einem vorne angehängten Zugseil und einem über einen Druckluftschlauch mit einem äußeren Preßluftkompressor verbundenen Schlagwerk, um den mit einem konischen Kopf ggf. mit Schneiden, versehenen Bodenverdrängungshammer unter Aufbrechung und Verdrängung der Altleitung ins umgebende Erdreich durch die Altleitung vorzutreiben, dadurch gekennzeichnet, daß der Druckluftschlauch (10) neben dem Zugseil (14) verlaufend von vorne in den Kopf (8) einmündet.

2. Bodenverdrängungshammer nach Anspruch 1, dadurch gekennzeichnet, daß das Gehäuse (1, 3) unter Bildung eines Luftzuführ-Ringspaltes (2) zweischalig mit einer axialen Lufteintrittsöffnung an der Spitze (8) des Außengehäuses (3) und mit radialen Luftdurchtrittsöffnungen (12, 13) des darin starr gehaltenen Steuerventils (5) ausgebildet ist.

EP 0 350 806 A2